# FASCICULE DE BREVET EUROPEEN

(11) **EP 3 529 889 B1**
(45) Date de publication et mention de la délivrance du brevet: **23.06.2021**
(21) Numéro de dépôt: 17823019.9
(22) Date de dépôt: 24.10.2017
(51) Int. Cl.: H02P 6/16, H02P 21/18

(54) **PROCEDES ET DISPOSITIFS RELATIFS A L'ESTIMATION D'UNE POSITION ANGULAIRE D'UN ROTOR**
VERFAHREN UND VORRICHTUNGEN ZUR SCHÄTZUNG EINER WINKELPOSITION EINES ROTORS
METHODS AND DEVICES FOR ESTIMATING AN ANGULAR POSITION OF A ROTOR

(30) Priorité: 24.10.2016 FR 1660281
(43) Date de publication de la demande: 28.08.2019
(73) Titulaire: Valeo Systèmes de Contrôle Moteur, 95800 Cergy Saint Christophe (FR)
(72) Inventeur: MAKNI, Zaatar, 94046 Créteil (FR); PEROT, Etienne, 93012 Bobigny (FR)
(86) Numéro de dépôt international: PCT/EP2017/077197
(87) Numéro de publication internationale: WO 2018/077896

(56) Documents cités:
- FR-A1- 2 966 301
- FR-A1- 3 005 539
- US-A1- 2004 257 028
- US-A1- 2014 139 172
- MAKNI ZAATAR ET AL: "Rotor position estimator based on machine learning", IECON 2016 - 42ND ANNUAL CONFERENCE OF THE IEEE INDUSTRIAL ELECTRONICS SOCIETY, IEEE, 23 octobre 2016 (2016-10-23), pages 6687-6692, XP033034113, DOI: 10.1109/IECON.2016.7793911

## Description

### DOMAINE TECHNIQUE

La présente invention concerne le domaine de l'estimation d'une position angulaire d'un rotor.

### ARRIÈRE-PLAN TECHNOLOGIQUE

Les commandes de moteurs à aimants permanents sont généralement équipées d'un capteur mécanique pour mesurer la position du rotor et, par extension, la vitesse du rotor. En effet, l'information de position du rotor est obligatoire pour effectuer le contrôle du champ orienté (de l'anglais : « Field Oriented Control » ou FOC), qui garantit une production efficace de couple. En plus de ces exigences fonctionnelles, des informations précises sur la position du rotor sont essentielles pour des raisons de sécurité dans le contexte particulier de véhicules électriques et hybrides. Ainsi, un codeur ou bien un résolveur est généralement associé à la machine électrique.

Par exemple, le document US2014/139172 décrit une machine électrique comprenant un dispositif de commande d'un onduleur selon le préambule de la revendication 12.

Toutefois, cela augmente le coût et la complexité et peut compromettre la fiabilité. Par conséquent, il y a eu un fort intérêt à éliminer le capteur de position ou à le redonder par un estimateur logiciel. Des systèmes ont été proposés pour le contrôle sans capteur (en anglais : « sensorless ») des moteurs à aimants permanents, basés sur un modèle de la machine électrique.

Cependant, les stratégies sans capteur basées sur un modèle sont très dépendantes de ce modèle et très sensibles aux attributs non idéaux physiques à savoir : la non-linéarités de l'onduleur et de la machine électrique, les retards de traitement du signal, la saturation, etc.

L'invention a pour but de pallier au moins en partie les inconvénients précédents.

### RÉSUMÉ DE L'INVENTION

À cet effet, il est proposé un procédé de conception d'un module d'estimation destiné à estimer une position angulaire d'un rotor d'une machine électrique par rapport à un stator de cette machine électrique à partir de courants de phase destinés à parcourir respectivement des phases statoriques de la machine électrique, la conception du module d'estimation comportant :
- la mesure des courants de phase et de la position angulaire du rotor pour chacun de plusieurs points de fonctionnement de la machine électrique, de manière à obtenir une pluralité de mesures associant chacune les courants de phase à la position angulaire,
- l'apprentissage d'une fonction générique à partir d'une première partie des mesures, appelées mesures d'apprentissage, afin d'obtenir une fonction instruite, l'apprentissage étant réalisé en utilisant les courants de phase des mesures d'apprentissage comme données d'entrée de la fonction générique et la position angulaire des mesures d'apprentissage comme donné de sortie de la fonction générique,
- l'implémentation de la fonction instruite dans un module d'estimation afin que le module d'estimation utilise la fonction instruite pour estimer la position angulaire du rotor à partir des courants de phase.

Grâce à l'invention, il n'est pas nécessaire de modéliser la machine électrique, ce qui permet d'éviter les inconvénients liés à cette modélisation.

De façon optionnelle, dans les mesures, les courants de phase sont exprimés sous la forme de deux composantes uniquement, par exemple les deux composantes d'un repère fixe par rapport au stator, par exemple le repère de Clarke ou de Concordia.

De façon optionnelle également, dans les mesures, les courants de phase sont exprimés sous leur forme naturelle, c'est-à-dire sous la forme de composantes formées par respectivement les courants de phase individuels.

De façon optionnelle également, le procédé comporte en outre :
- le test de la fonction instruite à partir d'une deuxième partie des mesures, appelées mesures de test,
et l'étape d'implémentation de la fonction instruite dans le module d'estimation est réalisée si le test est réussi, et n'est pas réalisée dans le cas contraire.

De façon optionnelle également, les points de fonctionnement sont définis par une vitesse de rotation du rotor et par un couple fourni par la machine électrique.

De façon optionnelle également, la vitesse de rotation de chaque point de fonctionnement est séparée de la vitesse de rotation du plus proche point de fonctionnement par au plus 1 000 tours par minute.

De façon optionnelle également, la valeur de couple de chaque point de fonctionnement est séparée de la valeur de couple du plus proche point de fonctionnement par au plus 25 N.m.

De façon optionnelle également, le module d'estimation est conçu pour estimer la position angulaire du rotor à partir, en plus des courants de phase, de tensions représentatives de tensions de phase appliquées respectivement aux phases statoriques de la machine électrique, le procédé comporte en outre l'obtention des tensions représentatives pour chacun des points de fonctionnement de la machine électrique, de sorte que chaque mesure associe les courants de phase et les tensions représentatives à la position angulaire, et, lors de l'apprentissage de la fonction générique, les tensions représentatives sont utilisées, en plus des courants de phase, comme données d'entrée de la fonction générique.

De façon optionnelle également, les tensions représentatives sont des consignes de tensions de phase.

De façon optionnelle également, dans les mesures, les tensions représentatives sont exprimées sous la forme de deux composantes uniquement, par exemple les deux composantes d'un repère fixe par rapport au stator, par exemple le repère de Clarke ou de Concordia.

Il est également proposé un procédé de fabrication d'un dispositif de commande d'un onduleur conçu pour fournir à des phases statoriques d'une machine électrique des tensions de phases alternatives à partir d'une source de tension continue, comportant :
- la conception d'un module d'estimation par un procédé selon l'invention,
- la fabrication du dispositif de commande de manière à ce qu'il comporte :
   - le module d'estimation,
   - un module de commande conçu pour commander l'onduleur à partir de la position angulaire estimée par le module d'estimation, de manière à faire tourner le rotor par rapport au stator.

Il est également proposé un dispositif de commande d'un onduleur selon la revendication 12.

Il est également proposé un système d'entraînement comportant :
- une machine électrique, comportant :
   - un rotor,
   - un stator comportant trois phases statoriques,
- une source de tension continue,
- un onduleur conçu pour fournir aux phases statoriques des tensions de phases alternatives à partir de la source de tension continue de manière à faire tourner le rotor par rapport au stator,
- un dispositif de mesure conçu pour mesurer les courants de phase parcourant respectivement les trois phases statoriques,
- un dispositif de commande de l'onduleur selon l'invention.

### DESCRIPTION DES FIGURES

La figure 1 est un schéma illustrant un système d'entraînement selon l'invention.
La figure 2 est un schéma illustrant un système de conception d'un module d'estimation du système d'entraînement de la figure 1.
La figure 3 est un schéma-blocs illustrant un procédé de conception du module d'estimation du système d'entraînement de la figure 1.
La figure 4 illustre une répartition de points de fonctionnement d'une machine électrique du système d'entraînement de la figure 1.
La figure 5 est un ensemble de deux graphiques illustrant les résultats du module d'estimation du système d'entraînement de la figure 1.
La figure 6 est un schéma illustrant un autre système d'entraînement selon l'invention.
La figure 7 est un schéma illustrant un système de conception d'un module d'estimation du système d'entraînement de la figure 6.

### DESCRIPTION DÉTAILLÉE

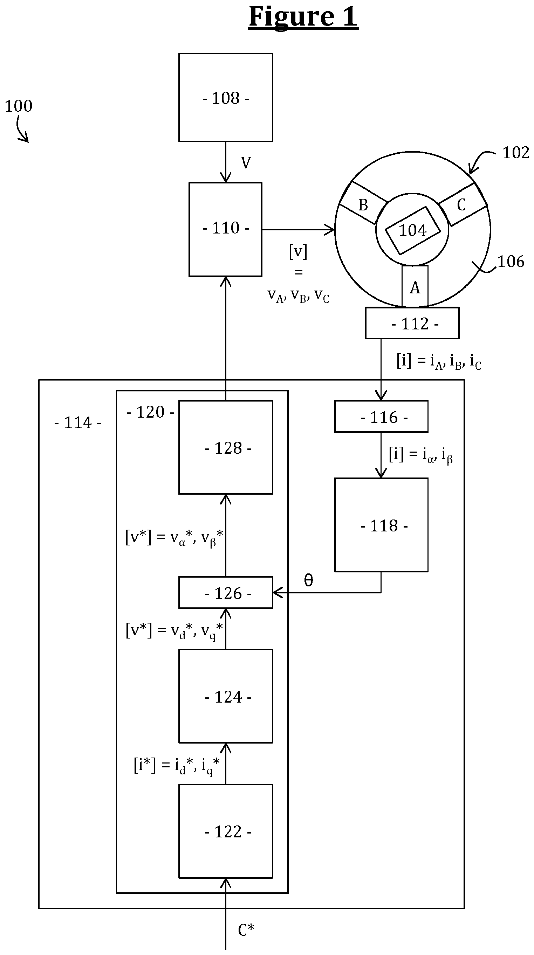

En référence à la figure 1, un système d'entraînement 100 selon l'invention va à présent être décrit.

Le système d'entraînement 100 comporte tout d'abord une machine électrique 102 comportant un rotor 104 et un stator 106 comportant trois phases statoriques A, B, C. Dans l'exemple décrit, la machine électrique 102 est une machine synchrone à aimants permanents.

Le système d'entraînement 100 comporte en outre une source de tension continue 108 conçue pour fournir une tension continue V. Dans l'exemple décrit, la source de tension continue 108 comporte une batterie.

Le système d'entraînement 100 comporte en outre un onduleur 110 conçu pour respectivement fournir aux phases statoriques A, B, C des tensions de phases v_{A}, v_{B}, vc alternatives à partir de la source de tension continue 108, de manière à ce que des courants de phase i_{A}, i_{B}, ic parcourent les phases statoriques A, B, C et que le rotor 104 tourne par rapport au stator 106.

Les grandeurs attachées aux phases statoriques, c'est-à-dire les tensions de phase, les courants de phase, les consignes correspondantes, etc., peuvent être exprimés de plusieurs manières. Ils peuvent être exprimés sous forme naturelle, c'est-à-dire par l'ensemble des grandeurs statoriques individuelles, ou bien dans un repère attaché au stator 106 par deux composantes uniquement, par exemple dans le repère de Clarke par les deux composantes α et β, ou bien dans un repère tournant attaché au rotor 104 par deux composantes uniquement, par exemple dans le repère d-q par les deux composantes d et q.

Ainsi, dans la description et les revendications qui vont suivre, les grandeurs porteront une référence entre crochets lorsqu'elles sont évoquées indépendamment de la manière de les exprimer, et par les composantes les exprimant lorsqu'elles sont évoquées dans une représentation précise.

Par exemple, les courants de phase seront notés [i] lorsqu'ils sont évoqués indépendamment de la manière de les représenter. En revanche, ils seront notés i_{A}, i_{B}, i_{C} lorsqu'ils sont exprimés sous leur forme naturelle, i_{α}, i_{β} lorsqu'ils sont exprimés dans le repère de Clarke, et i_{d}, i_{q} lorsqu'ils sont exprimés dans le repère d-q.

Le système d'entraînement 100 comporte en outre un dispositif de mesure 112 conçu pour mesurer les courants de phase i_{A}, i_{B}, ic parcourant respectivement les phases statoriques A, B, C.

Le système d'entraînement 100 comporte en outre un dispositif de commande 114 conçu pour commander l'onduleur 110 de manière à faire tourner le rotor 104 par rapport au stator 106.

Le dispositif de commande 114 comporte tout d'abord un module de conversion 116 conçu pour exprimer les courant de phase i_{A}, i_{B}, ic sous la forme de deux composantes uniquement. De préférence, les courant de phase i_{A}, i_{B}, ic sont exprimés dans un repère fixe, c'est-à-dire attaché au stator 106. Dans l'exemple décrit, ils sont exprimés dans le repère de Clarke sous la forme des composantes i_{α}, i_{β}.

Le dispositif de commande 114 comporte en outre un module d'estimation 118 conçu pour estimer une position angulaire θ du rotor 104 par rapport au stator 106 à partir des courants de phase [i], dans l'exemple décrit à partir des courants de phase i_{α}, i_{β}. En outre, dans l'exemple décrit, la position angulaire θ est exprimée sous la forme des deux variables sin(θ) et cos(θ). En effet, la position angulaire θ est utilisée dans le module 126 sous la forme des deux variables sin(θ) et cos(θ). En outre, l'utilisation des deux variables sin(θ) et cos(θ) permet d'éviter l'erreur de modulo 2π (c'est-à-dire la confusion entre θ et θ+ 2π).

Alternativement, le module d'estimation 118 pourrait être conçu pour estimer la position angulaire θ du rotor 104 à partir des courants de phase i_{A}, i_{B}, ic. Dans ce cas, le module de transformation 116 serait supprimé et le module d'estimation 118 recevrait directement les courants de phase i_{A}, i_{B}, ic mesurés par le dispositif de mesure 112.

Le dispositif de commande 114 comporte en outre un module de commande 120 conçu pour commander l'onduleur 110 à partir de la position angulaire θ du rotor 104 et d'une consigne de couple C*. Alternativement, la consigne de couple C* pourrait être remplacée ou bien complétée par une consigne de vitesse θ̇*.

Le module de commande 120 comporte un module 122 conçu pour déterminer, à partir de la consigne de couple C*, des consignes de courants de phase [i*] exprimées dans le repère d-q sous la forme des composantes i_{d}*, i_{q}*.

Le module de commande 120 comporte en outre un module 124 conçu pour déterminer, à partir des consignes de courants de phase i_{d}*, i_{q}*, des consignes de tensions de phase [v*] exprimées dans le repère d-q sous la formes des composantes v_{d}*, v_{q}*.

Le module de commande 120 comporte en outre un module de conversion 126 conçu pour convertir les consignes de tensions de phase v_{d}*, v_{q}* en consignes de tensions de phase [v*] exprimées dans le repère de Clarke sous la forme des deux composantes v_{α}*, v_{β}*. Cette conversion nécessite la connaissance de la position angulaire θ du rotor 104, qui est fournie par le module d'estimation 118.

Le module de commande 120 comporte en outre un module 128 conçu pour commander l'onduleur 110 en fonction des consignes de tension de phase v_{α}*, v_{β}*, de sorte que l'onduleur 110 fournissent aux phases A, B, C des tensions de phase v_{A}, v_{B}, vc respectives correspondant aux consignes de tension de phase v_{α}*, v_{β}*.

Dans l'exemple décrit, le dispositif de commande 120 comporte un système informatique comportant une unité de traitement (non représentée) et une mémoire (non représentée) dans laquelle est enregistré un programme d'ordinateur destiné à être exécuté par l'unité de traitement. Ainsi, les modules décrits précédemment sont implémentés dans l'exemple décrit dans le programme d'ordinateur sous forme de modules informatiques destinés à être exécutés par l'unité de traitement.

Alternativement, tout ou partie des modules pourrait être implémenté sous forme matérielle, c'est-à-dire sous forme d'un circuit électronique ne faisant pas intervenir de programme d'ordinateur.

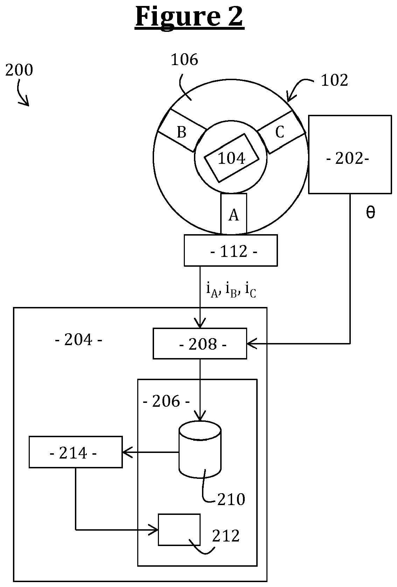

En référence à la figure 2, un système de conception 200 du module d'estimation 118 va à présent être décrit.

Le système de conception 200 comporte tout d'abord la machine électrique 106 et le dispositif de mesure 112 de la figure 1.

Le système de conception 200 comporte en outre un dispositif de mesure 202 de la position angulaire θ du rotor 104.

Le système de conception 200 comporte en outre un dispositif d'apprentissage 204.

Le dispositif d'apprentissage 204 comporte tout d'abord une mémoire 206.

Le dispositif d'apprentissage 204 comporte en outre un module d'acquisition 208 conçu pour enregistrer, dans la mémoire 206, les courants de phase [i] et de la position angulaire θ du rotor 104 mesurés par les dispositifs de mesure 112, 202.

Les mesures enregistrées sont désignées par la référence 210. Ainsi, chacune des mesures 210 associe les courants de phase [i] mesurés à la position angulaire θ mesurée pour un point de fonctionnement. Dans l'exemple décrit, un point de fonctionnement est défini par, d'une part, un couple fourni par la machine électrique 102 et, d'autre part, la vitesse de rotation θ̇ du rotor 104.

En outre, dans l'exemple décrit, le module d'acquisition 208 est conçu pour convertir les courants de phase i_{A}, i_{B}, ic reçus du dispositif de mesure 112 en courants de phase exprimés dans un repère fixe sous la forme de deux composantes. Dans l'exemple décrit, le repère de Clarke est utilisé et, dans les mesures 210, les courants de phase [i] sont exprimés sous la forme des deux composantes i_{α}, i_{β}.

Le dispositif d'apprentissage 204 comporte en outre une fonction générique 212 enregistrée dans la mémoire 206. La fonction générique 212 est une fonction conçue pour recevoir des données d'entrée et pour fournir des données de sortie à partir des données d'entrée. En outre, la fonction générique 212 présente des paramètres destinés à être modifiés lors d'une phase d'apprentissage (« *machine learning »* en anglais) de manière à obtenir une fonction instruite 212.

Le dispositif d'apprentissage 204 comporte en outre un module d'apprentissage 214 conçu pour réaliser l'apprentissage de la fonction générique 212 à partir d'une première partie des mesures 210, appelées mesures d'apprentissage, afin d'obtenir une fonction instruite 212. Le module d'apprentissage 214 est conçu, pour chaque mesure d'apprentissage, pour utiliser les courants de phase [i] comme données et la position angulaire θ comme donnée de sortie de la fonction générique 212. Le module d'apprentissage 214 est conçu pour modifier les paramètres de la fonction générique 212 de sorte que, lorsque les données d'entrée, c'est-à-dire les courants de phase i_{α}, i_{β}, sont appliquées à la fonction générique 212, cette dernière donne des résultats proches des données de sortie, c'est-à-dire les positions angulaires θ, respectives des mesures d'apprentissage.

La fonction générique 212 et l'apprentissage sont par exemple conformes à l'une des quatre méthodes d'apprentissage suivantes.

La première méthode d'apprentissage est la régression de machine de vecteur de support (en anglais : « Support Vector Machine regressor ») décrite dans les documents :
- C-C. Chang, C-J. Lin, "LIBSVM: A Library for Support Vector Machines", http://www.csie.ntu.edu.tw ; et
- A-J. Smola, B. Schölkopf, « A Tutorial on Support Vector Régression », Statistics and computing archive, Vol.14 Issue 3, 2004, pages 199-222.

La deuxième méthode d'apprentissage est la fonction de base radiale (en anglais : « Radial Basis Function » de machine de vecteur de support. Il s'agit d'une extension de la première méthode, décrite par exemple dans le document :
- M. Hofmann, « Support Vector Machines - Kernels and the Kernel Trick », An elaboration for the Hauptseminar Reading Club SVM, 2006.

La troisième méthode d'apprentissage est un algorithme d'arbre de décision augmenté (en anglais : « boosted decision tree algorithm ») appelé régresseur AdaBoost (en anglais: « AdaBoost regressor»). Il est décrit par exemple dans les documents :
- Y. Freund, R. Schapire, « A Decision-Theoretic Generalization of on-Line Learning and an Application to Boosting », Journal of computer and system science, 1995, pages 119-139 ; et
- H. Drucker, « Improving Regressors using Boosting Techniques », ICML, 1997, Proceeding of the foorteenth International Conférence on Machine Learning, pages 107-115.

La quatrième méthode d'apprentissage utilise un réseau de neurones à trois couches (une couche d'entrée, une couche cachée et une de sortie). Par exemple, la couche d'entrée comporte autant de neurones que de données d'entrée, c'est-à-dire deux neurones dans l'exemple décrit où les données d'entrée sont les courants de phase i_{α}, i_{β}. La couche de sortie comporte autant de neurones que de données de sortie, c'est-à-dire deux neurones dans l'exemple décrit où la position est exprimée par les deux variables sin(θ) et cos(θ). La couche cachée comporte par exemple entre deux et dix neurones. De préférence, la couche cachée comporte le nombre de neurones donné par la formule suivante: (nombre de neurones d'entrée + nombre de neurones de sortie)/2. Cette formule donne trois neurones dans la couche cachée dans l'exemple décrit. Le réseau de neurones est ainsi de petite taille, et la phase d'apprentissage est rapide et les calculs nécessaires pour faire tourner le modèle sont simples.

La quatrième méthode d'apprentissage a donné les meilleurs résultats.

Le module d'apprentissage 214 est en outre conçu pour tester la fonction instruite 212 à partir d'une deuxième partie des mesure, appelées mesures de test. Pour réaliser ce test, le module d'apprentissage 214 est conçu, pour chaque mesure de test, pour utiliser les courants de phase [i] comme données d'entrée de la fonction instruite 212 et pour obtenir une estimation de position angulaire en sortie de la fonction instruite 212. Le module d'apprentissage 214 est en outre conçu pour déterminer une erreur d'estimation en comparant l'estimation de position angulaire avec la position angulaire de la mesure de test. Le module d'apprentissage 214 est en outre conçu pour déterminer un score d'évaluation à partir des erreurs d'estimation et pour comparer le score d'évaluation avec un seuil prédéterminé pour déterminer la réussite ou non du test de la fonction instruite.

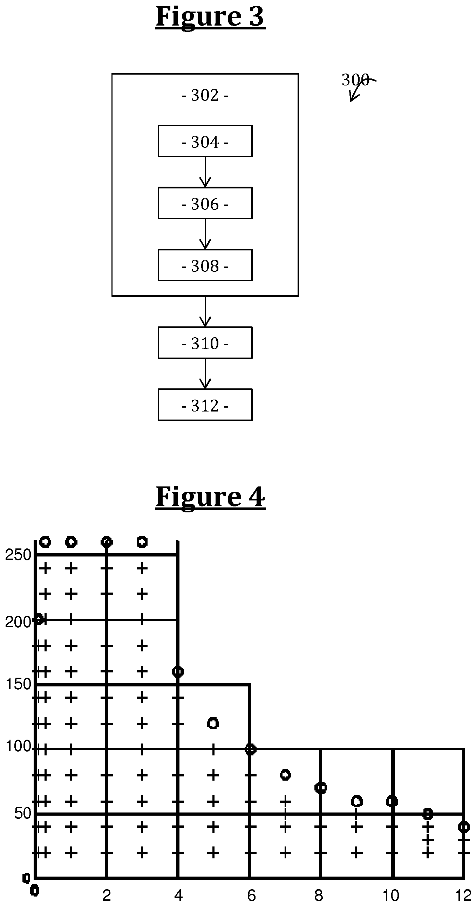

En référence à la figure 3, un procédé 300 de fabrication du dispositif de commande 114 va à présent être décrit.

Le procédé 300 comporte tout d'abord un procédé 302 de conception du module d'estimation 118.

Le procédé 302 comporte tout d'abord la mesure 304, par les dispositifs de mesure 112, 202, des courants de phase [i] et de la position angulaire θ du rotor 104 pour chacun de plusieurs point de fonctionnement de la machine électrique 106 et l'acquisition des mesures par le module d'acquisition 208. Ainsi, chacune des mesures 210 enregistrées associe les courants de phase [i] mesurés à la position angulaire θ mesurée pour un point de fonctionnement respectif. Dans l'exemple décrit, les courants de phase [i] sont sous la forme des deux composantes i_{α}, i_{β}.

Le procédé 302 comporte en outre l'apprentissage 306, par le module d'apprentissage 214, de la fonction générique 212 à partir des mesures d'apprentissage.

Le procédé 302 comporte en outre le test 308, par le module d'apprentissage 214, de la fonction instruite 212 à partir des mesures de test.

Le procédé 300 en outre comporte, en cas de réussite du test, l'implémentation 310 de la fonction instruite 212 dans le module d'estimation 118 afin que ce dernier l'utilise pour estimer la position angulaire θ du rotor 104 à partir des courants de phase [i]. Dans le cas contraire, la fonction instruite 212 n'est pas implémentée dans le module d'estimation 118.

Le procédé 300 comporte en outre la fabrication 312 du dispositif de commande 114 de manière à ce qu'il comporte : le module d'estimation 118 utilisant la fonction instruite 212, et un module de commande 120 conçu pour commander l'onduleur 110 à partir de la position angulaire θ estimée par le module d'estimation 118 et d'une consigne de couple C*, de manière à faire tourner le rotor 104 par rapport au stator 106.

En référence à la figure 4, un exemple de répartition des points de fonctionnement dans le plan des vitesses de rotation θ̇ du rotor 104 (en abscisse en milliers de tours par minute) et du couple (en ordonnée en Newton-mètre) va à présent être décrit.

Les croix et les ronds indiquent les points de fonctionnement où des mesures sont effectuées, les ronds représentant le maximum de couple.

De préférence, la vitesse de rotation de chaque point de fonctionnement est séparée de la vitesse de rotation du plus proche point de fonctionnement par au plus 1 000 tours par minute. En outre, la valeur de couple de chaque point de fonctionnement est séparée de la valeur de couple du plus proche point de fonctionnement par au plus 25 N.m. Ainsi, l'ensemble du domaine de fonctionnement de la machine électrique 102 est bien couvert.

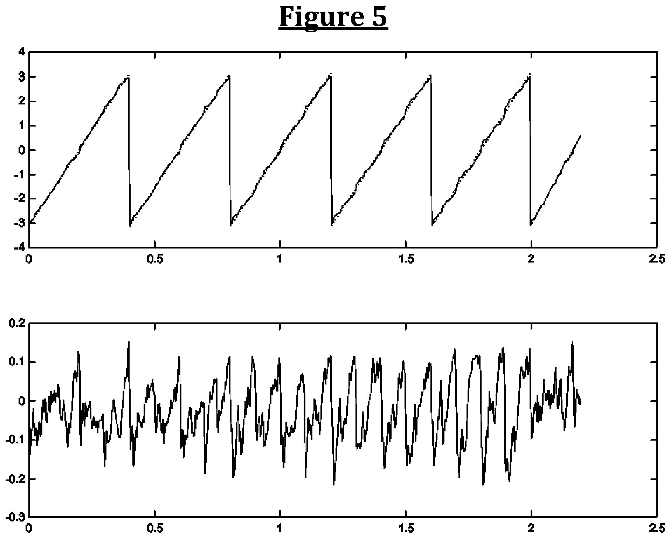

En référence à la figure 5, les résultats de l'utilisation de la quatrième méthode d'apprentissage vont à présent être décrits.

Le graphique du dessus représente l'évolution de la positon angulaire (en ordonnée, en radians) du rotor 104, mesurée par le dispositif de mesure 202, au cours du temps (an abscisse, en secondes). Dans le même temps, le module d'estimation 118 est utilisé pour estimer la position angulaire

Le graphique du dessous représente l'écart (en ordonnée, en radians) entre la position angulaire mesurée et la position angulaire estimée, au cours du temps (en abscisse, en secondes). Comme cela est visible, l'écart reste inférieur à 0,2 radian.

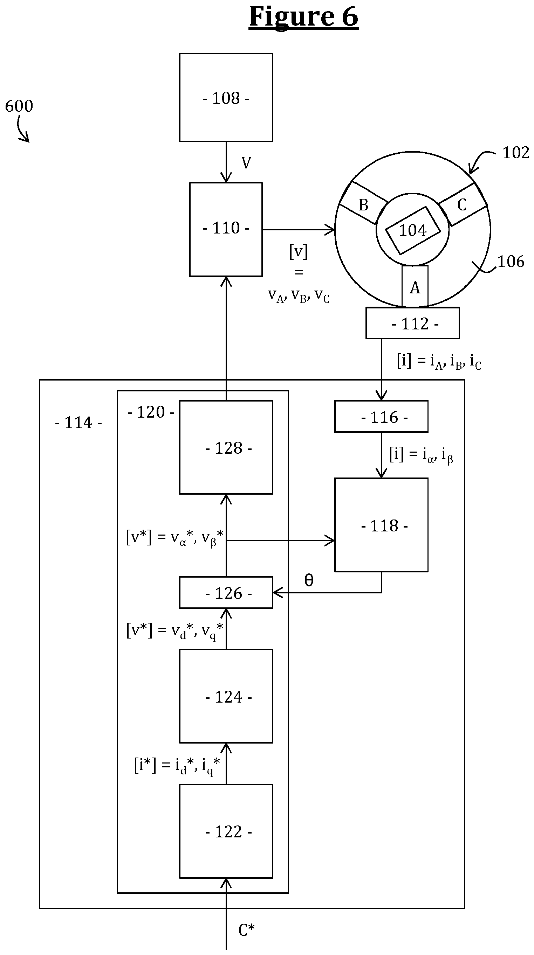

En référence à la figure 6, un autre système d'entraînement 600 selon l'invention va à présent être décrit.

Le système d'entraînement 600 est identique au système d'entraînement 100, si ce n'est que le module d'estimation 118 est conçu pour estimer la position angulaire θ du rotor 104 à partir, en plus des courants de phase [i], de tensions représentatives des tensions de phase [v]. Dans l'exemple décrit, les tensions représentatives sont les consignes de tension [v*]. En outre, dans l'exemple décrit, les consignes de tension [v*] sont exprimées dans le repère de Clarke sous la forme des composantes v_{α}*, v_{β}*.

Alternativement, les tensions représentatives pourraient être les tensions de phase [v], par exemple mesurées par un dispositif de mesure adapté (non représenté). Ces tensions de phases [v] pourraient être utilisées par le module d'estimation 118 sous leur forme naturelle v_{A}, v_{B}, v_{C} ou bien dans le repère de Clarke sous la forme des composantes v_{α}, v_{β}.

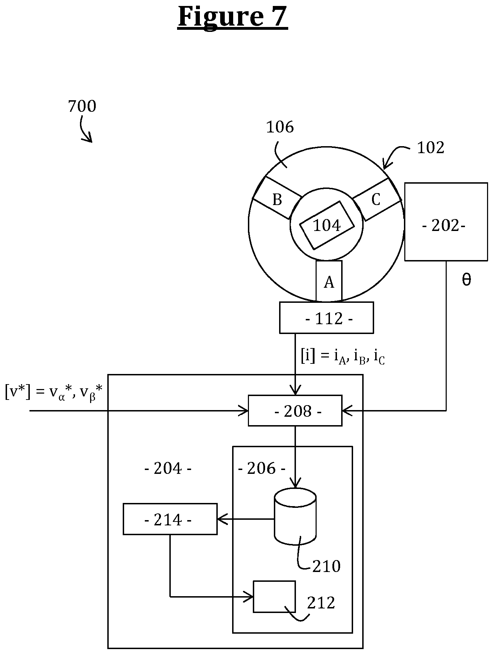

En référence à la figure 7, un système de conception 700 du module d'estimation 118 de la figure 6 va à présent être décrit.

Le système de conception 700 est identique au système de conception 200, si ce n'est que tout d'abord le module d'acquisition 208 est conçu pour enregistrer, dans la mémoire 206, les courants de phase [i], les tensions représentatives et la position angulaire θ du rotor 104.

Ainsi, chacune des mesures 210 associe les courants de phase [i] mesurée et les tensions représentatives à la position angulaire θ mesurée pour un point de fonctionnement respectif.

Par ailleurs, dans ce mode de réalisation, le module d'apprentissage 214 est conçu, pour chaque mesure d'apprentissage, pour utiliser, en plus des courants de phase [i], les tensions représentatives comme données d'entrée de la fonction générique 212 et la position angulaire θ comme donnée de sortie de la fonction générique 212. Le module d'apprentissage 214 est conçu pour modifier les paramètres de la fonction générique 212 de sorte que, lorsque les données d'entrée, c'est-à-dire les courants de phase [i] et les tensions représentatives, sont appliquées à la fonction générique 212, cette dernière donne des résultats proches des positions angulaires θ respectives des mesures d'apprentissage.

Ainsi, dans l'exemple décrit, il y a quatre données d'entrée : i_{α}, i_{β}, v_{α}, v_{β} de sorte que le nombre de neurones de la couche d'entrée et de la couche caché est adapté en conséquence, conformément àce qui a été expliqué auparavant.

Le procédé 300 peut être utilisé pour la conception du module d'estimation 118 de la figure 6, si ce n'est que l'apprentissage de la fonction générique 212 et le test de la fonction instruite 212 sont réalisés à partir, en plus des courants de phase [i], des tensions représentatives.

La présente invention n'est pas limitée aux modes de réalisation décrits précédemment, mais est au contraire définie par les revendications qui suivent. Il sera en effet apparent à l'homme du métier que des modifications peuvent y être apportées.

En particulier, l'invention pourrait s'appliquer à d'autres types de machines électriques, par exemple à des machines asynchrones.

En outre, d'autres repères pourraient être utilisés pour exprimer les tensions de phase, les courants de phase et les consignes correspondantes.

## Revendications

1. Procédé (302) de conception d'un module d'estimation (118) destiné à estimer une position angulaire (θ) d'un rotor (104) d'une machine électrique (102) par rapport à un stator (106) de cette machine électrique (102) à partir de courants de phase ([i]) destinés à parcourir respectivement des phases statoriques (A, B, C) de la machine électrique (102), la conception du module d'estimation (118) étant **caractérisée en ce qu'**elle comporte :
- la mesure (304) des courants de phase ([i]) et de la position angulaire (θ) du rotor (104) pour chacun de plusieurs points de fonctionnement de la machine électrique (102), de manière à obtenir une pluralité de mesures (210) associant chacune les courants de phase ([i]) à la position angulaire (θ),
- l'apprentissage (306) d'une fonction générique (212) à partir d'une première partie des mesures, appelées mesures d'apprentissage, afin d'obtenir une fonction instruite (212), l'apprentissage (306) étant réalisé en utilisant les courants de phase ([i]) des mesures d'apprentissage comme données d'entrée de la fonction générique (212) et la position angulaire (θ) des mesures d'apprentissage comme donné de sortie de la fonction générique (212),
- l'implémentation (310) de la fonction instruite (212) dans un module d'estimation (118) afin que le module d'estimation (118) utilise la fonction instruite (212) pour estimer la position angulaire (θ) du rotor (104) à partir des courants de phase ([i]).

2. Procédé (302) de conception d'un module d'estimation (118) selon la revendication 1, dans lequel, dans les mesures (210), les courants de phase ([i]) sont exprimés sous la forme de deux composantes (i_{α}, i_{β}) uniquement, par exemple les deux composantes d'un repère fixe par rapport au stator (106), par exemple le repère de Clarke ou de Concordia.

3. Procédé (302) de conception d'un module d'estimation (118) selon la revendication 1, dans lequel, dans les mesures (210), les courants de phase ([i]) sont exprimés sous leur forme naturelle, c'est-à-dire sous la forme de composantes formées par respectivement les courants de phase (i_{A}, i_{B}, i_{C}) individuels.

4. Procédé (302) de conception d'un module d'estimation (118) selon l'une quelconque des revendications 1 à 3, comportant en outre :
- le test (308) de la fonction instruite (212) à partir d'une deuxième partie des mesures, appelées mesures de test,
et dans lequel l'étape d'implémentation (310) de la fonction instruite (212) dans le module d'estimation (118) est réalisée si le test est réussi, et n'est pas réalisée dans le cas contraire.

5. Procédé (302) de conception d'un module d'estimation (118) selon l'une quelconque des revendications 1 à 4, dans lequel les points de fonctionnement sont définis par une vitesse de rotation du rotor (104) et par un couple fourni par la machine électrique (102).

6. Procédé (302) de conception d'un module d'estimation (118) selon la revendication 5, dans lequel la vitesse de rotation de chaque point de fonctionnement est séparée de la vitesse de rotation du plus proche point de fonctionnement par au plus 1 000 tours par minute.

7. Procédé (302) de conception d'un module d'estimation (118) selon la revendication 5 ou 6, dans lequel la valeur de couple de chaque point de fonctionnement est séparée de la valeur de couple du plus proche point de fonctionnement par au plus 25 N.m.

8. Procédé (302) de conception d'un module d'estimation (118) selon l'une quelconque des revendications 1 à 7,
dans lequel le module d'estimation (118) est conçu pour estimer la position angulaire (θ) du rotor (104) à partir, en plus des courants de phase ([i]), de tensions ([v*]) représentatives de tensions de phase ([v]) appliquées respectivement aux phases statoriques (A, B, C) de la machine électrique (102), le procédé (302) comportant en outre l'obtention des tensions représentatives ([v*]) pour chacun des points de fonctionnement de la machine électrique (102), de sorte que chaque mesure (210) associe les courants de phase ([i]) et les tensions représentatives ([v*]) à la position angulaire (θ),et
dans lequel, lors de l'apprentissage (306) de la fonction générique (212), les tensions représentatives ([v*]) sont utilisées, en plus des courants de phase ([i]), comme données d'entrée de la fonction générique (212).

9. Procédé (302) de conception d'un module d'estimation (118) selon la revendication 8, dans lequel les tensions représentatives ([v*]) sont des consignes de tensions de phase ([v*]).

10. Procédé (302) de conception d'un module d'estimation (118) selon la revendication 8 ou 9, dans lequel, dans les mesures (210), les tensions représentatives ([v*]) sont exprimées sous la forme de deux composantes (v_{α}*, v_{β}*) uniquement, par exemple les deux composantes d'un repère fixe par rapport au stator (106), par exemple le repère de Clarke ou de Concordia.

11. Procédé (300) de fabrication d'un dispositif de commande (114) d'un onduleur (110) conçu pour fournir à des phases statoriques (A, B, C) d'une machine électrique (102) des tensions de phases (v_{A}, v_{B}, v_{C}) alternatives à partir d'une source de tension continue (108), comportant :
- la conception (302) d'un module d'estimation (118) par un procédé selon l'une quelconque des revendications 1 à 10,
- la fabrication (312) du dispositif de commande (114) de manière à ce qu'il comporte :
- le module d'estimation (118),
- un module de commande (120) conçu pour commander l'onduleur (110) à partir de la position angulaire (θ) estimée par le module d'estimation (118), de manière à faire tourner le rotor (104) par rapport au stator (106).

12. Dispositif (300) de commande d'un onduleur (110) conçu pour fournir à des phases statoriques (A, B, C) d'une machine électrique (102) des tensions de phases (v_{A}, v_{B}, vc) alternatives à partir d'une source de tension continue (108), comportant :
- un module d'estimation (118) conçu pour estimer une position angulaire (θ) d'un rotor (104) d'une machine électrique (102) par rapport à un stator (106) de cette machine électrique (102) à partir de courants de phase ([i]) destinés à parcourir respectivement des phases statoriques (A, B, C) de la machine électrique (102),
- un module de commande (120) conçu pour commander l'onduleur à partir de la position angulaire (θ) du rotor (104), de manière à faire tourner le rotor (104) par rapport au stator (106),
ledit module d'estimation (118) étant **caractérisé en ce qu'**il utilise une fonction instruite pour estimer ladite position angulaire (θ) du rotor à partir desdits courants de phase ([i]), ladite fonction instruite étant obtenue par l'apprentissage (306) d'une fonction générique (212) à partir d'une première partie d'une pluralité de mesures, appelée mesures d'apprentissage, associant chacune une mesure (304) des courants de phase ([i]) et une mesure de la position angulaire (θ) du rotor (104) pour chacun de plusieurs points de fonctionnement de la machine électrique (102), l'apprentissage (306) étant réalisé en utilisant les courants de phase ([i]) des mesures d'apprentissage comme données d'entrée de la fonction générique (212) et la position angulaire (θ) des mesures d'apprentissage comme donné de sortie de la fonction générique (212).

13. Système d'entraînement (100 ; 600) comportant :
- une machine électrique (102), comportant :
- un rotor (104),
- un stator comportant trois phases statoriques (A, B, C),
- une source de tension continue (108),
- un onduleur (110) conçu pour fournir aux phases statoriques (A, B, C) des tensions de phases (v_{A}, v_{B}, v_{C}) alternatives à partir de la source de tension continue (108) de manière à faire tourner le rotor (104) par rapport au stator (106),
- un dispositif de mesure (112) conçu pour mesurer les courants de phase (i_{A}, i_{B}, i_{C}) parcourant respectivement les trois phases statoriques (A, B, C),
- un dispositif de commande de l'onduleur selon la revendication 12.

## Patentansprüche

1. Verfahren (302) zum Entwerfen eines Schätzungsmoduls (118), das dazu bestimmt ist, eine Winkelposition (θ) eines Rotors (104) einer elektrischen Maschine (102) im Verhältnis zu einem Stator (106) dieser elektrischen Maschine (102) ausgehend von Phasenströmen ([i]) zu schätzen, die dazu bestimmt sind, jeweils Statorphasen (A, B, C) der elektrischen Maschine (102) zu durchlaufen, wobei das Entwerfen des Schätzungsmoduls (118) **dadurch gekennzeichnet ist, dass** es Folgendes aufweist:
- das Messen (304) von Phasenströmen ([i]) und der Winkelposition (θ) des Rotors (104) für jeden mehrerer Betriebspunkte der elektrischen Maschine (102), um eine Mehrzahl von Messungen (210) zu erhalten, die jeweils die Phasenströme ([i]) der Winkelposition (θ) zuordnen,
- das Lernen (306) einer generischen Funktion (212) ausgehend von einem ersten Teil der Messungen, Lernmessungen genannt, um eine instruierte Funktion (212) zu erhalten, wobei das Lernen (306) unter Verwendung der Phasenströme ([i]) der Lernmessungen als Eingangsdaten der generischen Funktion (212) und der Winkelposition (θ) der Lernmessungen als Ausgangsdatenwert der generischen Funktion (212) durchgeführt wird,
- das Implementieren (310) der instruierten Funktion (212) in einem Schätzungsmodul (118), damit das Schätzungsmodul (118) die instruierte Funktion (212) nutzt, um die Winkelposition (θ) des Rotors (104) ausgehend von den Phasenströmen ([i]) zu schätzen.

2. Verfahren (302) zum Entwerfen eines Schätzungsmoduls (118) nach Anspruch 1, wobei in den Messungen (210) die Phasenströme ([i]) nur in Form zweier Komponenten (i_{α}, i_{β}) ausgedrückt werden, zum Beispiel die zwei Komponenten eines statorfesten Koordinatensystems (106), zum Beispiel das Clarke- oder Concordia-Koordinatensystem.

3. Verfahren (302) zum Entwerfen eines Schätzungsmoduls (118) nach Anspruch 1, wobei in den Messungen (210) die Phasenströme ([i]) in ihrer natürlichen Form ausgedrückt werden, das heißt in Form von Komponenten, die jeweils von den einzelnen Phasenströmen (i_{A}, i_{B}, i_{C}) gebildet sind.

4. Verfahren (302) zum Entwerfen eines Schätzungsmoduls (118) nach einem der Ansprüche 1 bis 3, ferner aufweisend:
- das Testen (308) der instruierten Funktion (212) ausgehend von einem zweiten Teil der Messungen, Testmessungen genannt,
und wobei der Schritt des Implementierens (310) der instruierten Funktion (212) im Schätzungsmodul (118) durchführt wird, wenn der Test erfolgreich ist, und im gegenteiligen Fall nicht durchführt wird.

5. Verfahren (302) zum Entwerfen eines Schätzungsmoduls (118) nach einem der Ansprüche 1 bis 4, wobei die Betriebspunkte von einer Drehzahl des Rotors (104) und einem Drehmoment, das von der elektrischen Maschine (102) bereitgestellt wird, definiert sind.

6. Verfahren (302) zum Entwerfen eines Schätzungsmoduls (118) nach Anspruch 5, wobei die Drehzahl jedes Betriebspunkts von der Drehzahl des am nächsten liegenden Betriebspunkts um höchstens 1000 Umdrehungen pro Minute getrennt ist.

7. Verfahren (302) zum Entwerfen eines Schätzungsmoduls (118) nach Anspruch 5 oder 6, wobei der Drehmomentwert jedes Betriebspunkts vom Drehmomentwert des am nächsten liegenden Betriebspunkts um höchstens 25 Nm getrennt ist.

8. Verfahren (302) zum Entwerfen eines Schätzungsmoduls (118) nach einem der Ansprüche 1 bis 7,
wobei das Schätzungsmodul (118) dafür ausgelegt ist, die Winkelposition (θ) des Rotors (104) ausgehend von, zusätzlich zu den Phasenströmen ([i]),
Spannungen ([v*]) zu schätzen, die für Phasenspannungen ([v]) repräsentativ sind, die jeweils an die Statorphasen (A, B, C) der elektrischen Maschine (102) angelegt sind, wobei das Verfahren (302) ferner das Erhalten der repräsentativen Spannungen ([v*]) für jeden der Betriebspunkte der elektrischen Maschine (102) aufweist, so dass jede Messung (210) die Phasenströme ([i]) und die repräsentativen Spannungen ([v*]) der Winkelposition (θ) zugeordnet, und
wobei beim Lernen (306) der generischen Funktion (212) die repräsentativen Spannungen ([v*]) zusätzlich zu den Phasenströmen ([i]) als Eingangsdaten der generischen Funktion (212) genutzt werden.

9. Verfahren (302) zum Entwerfen eines Schätzungsmoduls (118) nach Anspruch 8, wobei die repräsentativen Spannungen ([v*]) Vorgaben für Phasenspannungen ([v*]) sind.

10. Verfahren (302) zum Entwerfen eines Schätzungsmoduls (118) nach Anspruch 8 oder 9, wobei in den Messungen (210) die repräsentativen Spannungen ([v*]) nur in Form zweier Komponenten (v_{α}*, v_{β}*) ausgedrückt werden, zum Beispiel die zwei Komponenten eines statorfesten Koordinatensystems (106), zum Beispiel das Clarke- oder Concordia-Koordinatensystem.

11. Verfahren (300) zur Herstellung einer Vorrichtung zur Steuerung (114) eines Wechselrichters (110), der dafür ausgelegt ist, wechselnde Phasenspannungen (V_{A}, V_{B}, V_{C}) aus einer Gleichspannungsquelle (108) an Statorphasen (A, B, C) einer elektrischen Maschine (102) bereitzustellen, aufweisend:
- das Entwerfen (302) eines Schätzungsmoduls (118) durch ein Verfahren nach einem der Ansprüche 1 bis 10,
- das Herstellen (312) der Steuerungsvorrichtung (114), so dass sie Folgendes aufweist:
- das Schätzungsmodul (118),
- ein Steuerungsmodul (120), das dafür ausgelegt ist, den Wechselrichter (110) ausgehend von der Winkelposition (θ) zu steuern, die vom Schätzungsmodul (118) geschätzt wird, um den Rotor (104) bezogen auf den Stator (106) zu drehen.

12. Vorrichtung (300) zur Steuerung eines Wechselrichters (110), der dafür ausgelegt ist, wechselnde Phasenspannungen (V_{A}, V_{B}, V_{C}) aus einer Gleichspannungsquelle (108) an Statorphasen (A, B, C) einer elektrischen Maschine (102) bereitzustellen, aufweisend:
- ein Schätzungsmodul (118), das dafür ausgelegt ist, eine Winkelposition (θ) eines Rotors (104) einer elektrischen Maschine (102) im Verhältnis zu einem Stator (106) dieser elektrischen Maschine (102) ausgehend von Phasenströmen ([i]) zu schätzen, die dazu bestimmt sind, jeweils Statorphasen (A, B, C) der elektrischen Maschine (102) zu durchlaufen,
- ein Steuerungsmodul (120), das dafür ausgelegt ist, den Wechselrichter ausgehend von der Winkelposition (θ) des Rotors (104) zu steuern, um den Rotor (104) bezogen auf den Stator (106) zu drehen,
wobei das Schätzungsmodul (118) **dadurch gekennzeichnet ist, dass** es eine instruierte Funktion nutzt, um die Winkelposition (θ) des Rotors ausgehend von den Phasenströmen ([i]) zu schätzen,
wobei die instruierte Funktion durch das Lernen (306) einer generischen Funktion (212) ausgehend von einem ersten Teil einer Mehrzahl von Messungen, Lernmessungen genannt, erhalten wird, die jeweils eine Messung (304) der Phasenströme ([i]) und eine Messung der Winkelposition (θ) des Rotors (104) für jeden mehrerer Betriebspunkte der elektrischen Maschine (102) zuordnen, wobei das Lernen (306) unter Verwendung der Phasenströme ([i]) der Lernmessungen als Eingangsdaten der generischen Funktion (212) und die Winkelposition (θ) der Lernmessungen als Ausgangsdatenwert der generischen Funktion (212) durchgeführt wird.

13. Antriebssystem (100; 600) aufweisend:
- eine elektrische Maschine (102), aufweisend:
- einen Rotor (104),
- einen Stator mit drei Statorphasen (A, B, C),
- eine Gleichspannungsquelle (108),
- einen Wechselrichter (110), der dafür ausgelegt ist, wechselnde Phasenspannungen (V_{A}, V_{B}, V_{C}) aus der Gleichspannungsquelle (108) an die Statorphasen (A, B, C) bereitzustellen, um den Rotor (104) bezogen auf den Stator (106) zu drehen,
- eine Messvorrichtung (112), die dafür ausgelegt ist, die Phasenströme (i_{A}, i_{B}, i_{C}) zu messen, die jeweils die drei Statorphasen (A, B, C) durchlaufen,
- eine Vorrichtung zur Steuerung des Wechselrichters nach Anspruch 12.

## Claims

1. Method (302) for designing an estimation module (118) intended to estimate an angular position (θ) of a rotor (104) of an electrical machine (102) with respect to a stator (106) of this electrical machine (102) from phase currents ([i]) intended to flow respectively through the stator phases (A, B, C) of the electrical machine (102), the design of the estimation module (118) being **characterized in that** it comprises:
- measurement (304) of the phase currents ([i]) and of the angular position (θ) of the rotor (104) for each of a plurality of operating points of the electrical machine (102), so as to obtain a plurality of measurements (210) each associating the phase currents ([i]) with the angular position (θ),
- learning (306) of a generic function (212) from a first part of the measurements, called learning measurements, in order to obtain an instructed function (212), the learning (306) being performed by using the phase currents ([i]) of the learning measurements as input data of the generic function (212) and the angle of position (θ) of the learning measurements as output data of the generic function (212),
- implementation (310) of the instructed function (212) in an estimation module (118) in order for the estimation module (118) to use the instructed function (212) to estimate the angular position (θ) of the rotor (104) from the phase currents ([i]).

2. Method (302) for designing an estimation module (118) according to the Claim 1, wherein, in the measurements (210), the phase currents ([i]) are expressed in the form of two components (iα, iβ) only, for example the two components of a fixed reference frame with respect to the stator (106), for example the Clarke or Concordia reference frame.

3. Method (302) for designing an estimation module (118) according to the Claim 1, wherein, in the measurements (210), the phase currents ([i]) are expressed in their natural form, that is to say in the form of components formed respectively by the individual phase currents (i_{A}, i_{B}, i_{C}).

4. Method (302) for designing an estimation module (118) according to any one of Claims 1 to 3, further comprising:
- testing (308) of the instructed function (212) from a second part of the measurements, called test measurements,
and wherein the step of implementation (310) of the instructed function (212) in the estimation module (118) is performed if the test is successful, and is not performed otherwise.

5. Method (302) for designing an estimation module (118) according to any one of Claims 1 to 4, wherein the operating points are defined by a speed of rotation of the rotor (104) and by a torque supplied by the electrical machine (102).

6. Method (302) for designing an estimation module (118) according to Claim 5, wherein the speed of rotation of each operating point is separated from the speed of rotation of the closest operating point by at most 1000 revolutions per minute.

7. Method (302) for designing an estimation module (118) according to Claim 5 or 6, wherein the torque value of each operating point is separated from the torque value of the closest operating point by at most 25 N.m.

8. Method (302) for designing an estimation module (118) according to any one of Claims 1 to 7,
wherein the estimation module (118) is designed to estimate the angular position (θ) of the rotor (104) from, in addition to the phase currents ([i]), voltages ([v*]) representative of phase voltages ([v]) applied respectively to the stator phases (A, B, C) of the electrical machine (102),
the method (302) further comprising the obtaining of the representative voltages ([v*]) for each of the operating points of the electrical machine (102), such that each measurement (210) associates the phase currents ([i]) and the representative voltages ([v*]) with the angular position (θ), and
wherein, during the learning (306) of the generic function (212), the representative voltages ([v*]) are used, in addition to the phase currents ([i]), as input data of the generic function (212).

9. Method (302) for designing an estimation module (118) according to Claim 8, wherein the representative voltages ([v*]) are setpoints of phase voltages ([v*]).

10. Method (302) for designing an estimation module (118) according to Claim 8 or 9, wherein, in the measurements (210), the representative voltages ([v*]) are expressed in the form of two components (v_{α}*,v_{β}*) only, for example the two components of a fixed reference frame with respect to the stator (106), for example the Clarke or Concordia reference frame.

11. Method (300) for manufacturing a control device (114) of an inverter (110) designed to supply stator phases (A, B, C) of an electrical machine (102) with alternating phase voltages (v_{A}, v_{B}, v_{C}) from a direct voltage source (108), comprising:
- the design (302) of an estimation module (118) by a method according to any one of Claims 1 to 10,
- the manufacture (312) of the control device (114) such that it comprises:
- the estimation module (118),
- a control module (120) designed to control the inverter (110) from the angular position (θ) estimated by the estimation module (118), so as to make the rotor (104) revolve with respect to the stator (106) .

12. Control device (300) of an inverter (110) designed to supply stator phases (A, B, C) of an electrical machine (102) with alternating phase voltages (v_{A}, v_{B}, v_{C}) from a direct voltage source (108), comprising:
- an estimation module (118) designed to estimate an angular position (θ) of a rotor (104) of an electrical machine (102) with respect to a stator (106) of this electrical machine (102) from phase currents ([i]) intended to flow respectively through the stator phases (A, B, C) of the electrical machine (102),
- a control module (120) designed to control the inverter from the angular position (θ) of the rotor (104), so as to make the rotor (104) revolve with respect to the stator (106),
said estimation module (118) being **characterized in that** it uses an instructed function to estimate said angular position (θ) of the rotor from said phase currents ([i]), said instructed function being obtained by the learning (306) of a generic function (212) from a first part of a plurality of measurements, called learning measurements, each associating a measurement (304) of the phase currents ([i]) and a measurement of the angular position (θ) of the rotor (104) for each of a plurality of operating points of the electrical machine (102), the learning (306) being performed by using the phase currents ([i]) of the learning measurements as input data of the generic function (212) and the angular position (θ) of the learning measurements as output data of the generic function (212) .

13. Drive system (100; 600) comprising:
- an electrical machine (102), comprising:
- a rotor (104),
- a stator comprising three stator phases (A, B, C),
- a direct voltage source (108),
- an inverter (110) designed to supply the stator phases (A, B, C) with alternating phase voltages (v_{A}, v_{B}, v_{C}) from the direct voltage source (108) so as to make the rotor (104) revolve with respect to the stator (106),
- a measurement device (112) designed to measure the phase currents (i_{A}, i_{B}, i_{C}) flowing respectively through the three stator phases (A, B, C),
- a control device of the inverter according to Claim 12.
